# FASCICULE DE BREVET EUROPEEN

(11) **EP 2 442 002 B1**
(45) Date de publication et mention de la délivrance du brevet: **30.07.2014**
(21) Numéro de dépôt: 11185120.0
(22) Date de dépôt: 13.10.2011
(51) Int. Cl.: F16L 59/00

(54) **Flocon isolant**
Isolierflocke
Insulating flake

(30) Priorité: 13.10.2010 FR 1058357
(43) Date de publication de la demande: 18.04.2012
(73) Titulaire: Cavac Biomateriaux, 85000 La Roche sur Yon (FR)
(72) Inventeur: Meyer, Cyril, 85210 La Reorthe (FR); Joreau, Olivier, 85340 Olonne sur Mer (FR)
(74) Mandataire: Sartorius, Jérome

(56) Documents cités:
- DE-A1-102004 053 131
- ROCKWOOL: "Rockwool 001 laine en flocons", ROCKWOOL France , 10 mai 2010 (2010-05-10), XP002664103, Extrait de l'Internet: URL:http://guide-solutions.rockwool.fr/pro duits--systemes/toiture-comble-mur-cloison -plancher-sol--cheminee/rockwool-001.aspx [extrait le 2011-11-22]
- VALTECH INDUSTRIE: "Câlin - L'Isolant par nature", INTERNET CITATION, 21 mai 2010 (2010-05-21), pages 1-8, XP002614399, Extrait de l'Internet: URL:http://www.naturmat.com/C2.pdf [extrait le 2010-12-15]
- VALTECH INDUSTRIE: "Valnat - l'isolation nature", INTERNET CITATION, 10 décembre 2009 (2009-12-10), pages 1-5, XP002614400, Extrait de l'Internet: URL:http://www.alternatstyle.com/alternat/ catalogue/isolation/chanvre_et_ lin/valnat [extrait le 2010-12-15]
- IKOB-BKB: 'Attestation KOMO Nr. IKB1910/08: Post-isolation de murs creux avec la laine à insufler Knauf Insulation Supafil', [en ligne] 23 Septembre 2008, pages 1 - 8, XP055038468 Extrait de l'Internet: <URL:http://reno-isol.be/wp-content/uploads /2012/01/komofr.pdf> [extrait le 2012-09-18]

## Description

### Domaine technique

La présente invention se rapporte à un flocon isolant thermiquement et acoustiquement et à un procédé de fabrication d'un tel flocon.

### Etat de la technique

Devant les obstacles environnementaux liés à l'utilisation des laines minérales classiques, des matériaux isolants à base de matières premières d'origine naturelle ont été développés.

On connaît par de DE 195 16 186 un matériau isolant comprenant entre 37 et 52 % de particules d'un matériau cellulosique présentant une taille inférieure à 5 mm, entre et 30 % de fibres naturelles de longueur comprise entre 5 et 30 mm, et entre 18 et 47 % d'un agent liant.

Le document "Rockwool 001 - Laine en flocons" de Rockwool France divulgue un ensemble de flocons, chaque flocon ayant une taille comprise entre 10 et 50 mm.

L'attestation KOMO numéro IKB1910/08 "Post isolation de murs creux avec laine à insuffler Knauf Insulation Supafil" divulgue un ensemble de flocons, chaque flocon étant le résultat d'un traitement mécanique d'une laine de verre sans agent liant.

Les documents "Calin - L'isolant par nature" et "Valnat - L'isolation nature" de Valtech Industrie divulguent l'utilisation d'un matériau isolant comprenant en pourcentages en masse par rapport à la masse totale dudit matériau, entre 5 et 80 % de fibres de lin et entre 5 et 80 % de fibres de chanvre, ce matériau étant respectueux de l'environnement et apte à fournir une isolation performante et efficace pour réguler l'hygrométrie.

Les performances de ces matériaux, notamment en termes de résistance à l'humidité, de résistance thermique et de longévité doivent être sans cesse améliorées.

Un objectif de la présente est un matériau isolant répondant, au moins partiellement, à ces besoins.

### Résumé de l'invention

A cet effet, l'invention propose un flocon, notamment destiné à l'isolation thermique et acoustique, comprenant, en pourcentages en masse par rapport à la masse totale dudit flocon, entre 5 et 80 % de fibres de lin et entre 5 et 80 % de fibres de chanvre, ledit flocon ayant une taille comprise entre 10 et 50 mm.

Un tel flocon procure une isolation naturelle et performante. Contre toute attente, les inventeurs ont également découvert que l'association des fibres de lin et de chanvre est particulièrement efficace pour réguler l'hygrométrie : ainsi, un flocon selon l'invention est-il capable d'absorber une partie de l'humidité ambiante et de la restituer quand l'atmosphère devient sèche.

De préférence, les fibres de lin sont présentes dans ledit flocon selon l'invention en une teneur comprise entre 10 et 80 %, entre 20 et 60 %, entre 30 et 50 %, de préférence encore entre 40 et 45 %, en pourcentages en masse par rapport à la masse totale dudit flocon.

De préférence, les fibres de chanvre sont présentes en une teneur comprise entre 10 et 80%, entre 20 et 60 %, entre 30 et 50 %, de préférence encore entre 40 et 45 %, en pourcentages en masse par rapport à la masse totale dudit flocon.

Un flocon selon l'invention peut en outre comprendre plus de 3%, de préférence plus de 5% et/ou moins de 25%, moins de 10% de chènevottes du lin et/ou du chanvre, en pourcentages en masse par rapport à la masse totale dudit flocon.

Selon un mode de réalisation particulier, un flocon selon l'invention comprend, en pourcentages en masse par rapport à la masse totale dudit flocon,
- plus de 30 %, de préférence plus de 40 % et/ou moins de 60 %, de préférence moins de 45 % de fibres de lin et
- plus de 30 %, de préférence plus de 40 % et/ou de 45 % de fibres de chanvre.

Les fibres de lin présentent une taille de préférence supérieure à 25 mm, de préférence supérieure à 30 mm et/ou inférieure à 100 mm, inférieure à 80 mm, de préférence inférieure à 60 mm.

Les fibres de chanvre présentent une taille moyenne de préférence supérieure à 25 mm, de préférence supérieure à 30 et/ou inférieure à 100 mm, inférieure à 80 mm, de préférence inférieure à 60 mm.

L'utilisation de fibres présentant une taille moyenne élevée permet avantageusement un enchevêtrement entre les fibres contribuant au de la structure du flocon. Il en résulte une résistance à l'écrasement du flocon et donc une durée de vie (pendant laquelle il présente une efficacité maximale) augmentée.

Par ailleurs, les flocons peuvent être avantageusement conditionnés dans des balles ou dans des sacs, après été compactés. Lors de leur épandage, il est important qu'ils reprennent du volume afin d'optimiser le rendement, c'est-à-dire l'efficacité de l'isolation ramenée à la quantité de flocons épandue. L'enchevêtrement résultant de l'utilisation de fibres une taille moyenne élevée confère avantageusement une capacité supérieure à reprendre du volume.

De préférence, les constituants issus des pailles de lin et de chanvre, de préférence les fibres de lin et de chanvre, représentent ensemble plus de 80 %, plus de 90 %, voire plus de 95 %, de la masse totale du flocon. De préférence, les fibres de lin, les fibres de chanvre et les chènevottes optionnelles représentent ensemble plus de 90 %, voire plus de 95 %, voire sensiblement 100% de la masse totale du flocon.

De préférence, la plus petite dimension du flocon est supérieure à 1cm et/ou inférieure à 5cm.

De préférence, la masse volumique du matériau fibreux constituant le flocon est supérieure à 10 kg/m³ et/ou inférieure à 30 kg/m³.

L'invention concerne également un ensemble composé de flocons selon la présente invention.

De préférence, la taille moyenne des flocons est comprise entre 10 et 60 mm.

De préférence, la masse volumique d'un ensemble de flocons selon l'invention, mesurée après déversement et répartition homogéne manuelle (sans compression, ni tri) est supérieure à 8 kg/m³, supérieure à 10 kg/m³, supérieure à 12 kg/m³ et/ou inférieure à 20 kg/m³, inférieure à 18 kg/m³, inférieure à 16 kg/m³.

De manière générale, l'invention concerne l'utilisation d'un ensemble de flocons selon l'invention pour l'isolation thermique et/ou acoustique.

### Définitions

On appelle « flocon » une particule d'une taille comprise entre 10 et 50 mm.

Un ensemble de flocons, ou « poudre de flocons », est un ensemble particulaire de flocons.

On appelle « fibre » une substance filamenteuse issue de la partie périphérique fibreuse d'une et présentant une longueur plus de 10 fois supérieure à sa plus grande dimension dans un plan transversal quelconque, dite "largeur", les plans transversaux étant les plans coupant la fibre perpendiculairement à la direction de sa longueur. Le rapport de la largeur sur la longueur est appelé "sphéricité".

La taille d'un ensemble de fibres est la moyenne arithmétique des longueurs de ces fibres.

La taille d'un flocon est sa plus grande dimension.

La taille moyenne d'un ensemble de flocons est la moyenne arithmétique des tailles de ces flocons.

Sauf mention contraire, dans toute la description, les pourcentages mentionnés sont des pourcentages massiques.

Sauf indication contraire, par « comportant » ou « comprenant », on signifie « comportant au moins ».

### Brève description de la figure

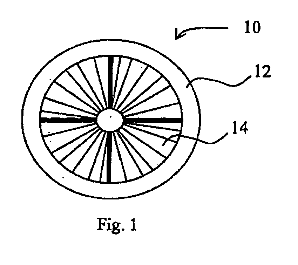

D'autres caractéristiques et avantages de l'invention apparaîtront encore à la lecture de la description détaillée qui va suivre et à l'examen du dessin annexé dans lequel la figure 1 représente, en coupe transversale, une paille de lin ou de chanvre.

### Description détaillée d'un mode de réalisation

Un flocon selon l'invention peut être fabriqué suivant les étapes a) à d) précédemment mentionnées.

Les fibres sont séparées des anas de lin, des chènevottes, et des fines par défibrage de pailles de lin et de pailles de chanvre.

Comme représenté sur la figure 1, une paille 10 de lin ou de chanvre comporte une partie périphérique fibreuse 12 et une partie centrale 14, plus rigide que la partie périphérique fibreuse 12 et parfois appelée "bois".

Les fibres sont classiquement extraites de la partie périphérique fibreuse et, en particulier, sont séparées des fines par tamisage, par exemple au moyen d'un tamis de maille carrée dont l'ouverture présente un côté d'une longueur de 10 mm, ou de préférence de 5 mm.

Les pailles de chanvre et de lin utilisées peuvent provenir de l'agriculture biologique, c'est-à-dire de cultures utilisant peu ou pas d'intrant de traitement phytosanitaires, d'insecticides, voire pas de produit chimique, La paille de chanvre peut notamment n'avoir subi aucun traitement, ce qui avantageusement limite les risques allergéniques pour l'utilisateur final, L'absence de traitement évite également toute dégradation des propriétés du flocon.

De préférence, les fibres de lin sont issues d'une ou plusieurs des variétés suivantes de lin : Everest® et Banquise®.

De préférence, les fibres de sont d'une ou plusieurs des variétés suivantes de chanvre: Futura 75®, Epsilon 68®, Santhica 27®, Fédora 17 BIO®, Uso 31 BIO®.

Le défibrage de la paille de chanvre permet classiquement d'obtenir, entre 20 et 25 % d'un mélange fibreux de fibres de chanvre, et entre 55 et 60 % de chènevottes, en pourcentages en masse par rapport à la masse totale de la paille de chanvre.

Des de lin, des chènevottes et des fines peuvent être présents, à titre d'impuretés, dans le mélange fibreux. Leur teneur massique totale dans ce mélange fibreux est de préférence inférieure à 15 %, de préférence inférieure à 10 %, voire inférieure à 5 %. En particulier, on peut sélectionner un mélange fibreux de chanvre dit « de qualité papetière », consistant en un mélange de fibres de chanvre et de chènevottes, la teneur en chènevottes étant comprise entre 10 et 60% en masse du mélange.

On peut également sélectionner un mélange fibreux de chanvre dit « de qualité technique », c'est-à-dire un mélange de fibres de chanvre et de chènevottes au sein duquel la teneur en chènevottes est inférieure à 10 % en masse du mélange.

Le défibrage de la paille de lin permet d'obtenir entre 15% et 40 % d'un mélange fibreux de fibres de lin, en pourcentage en masse par rapport à la masse totale de la paille de lin traitée. De préférence, ce mélange comporte plus de 50 %, plus de 60 %, plus de 70 %, plus de 80 %, voire plus de 90 % de fibres de lin.

Selon un mode de réalisation préféré, seules les fibres de chanvre et les fibres de lin sont conservées à l'issue du défibrage pour la fabrication d'un flocon selon l'invention.

De préférence, la charge de départ comporte moins de 20%, de préférence moins de 15%, de préférence moins de 10%, de préférence moins de 5% en masse de particules non fibreuses, en pourcentage sur la base des des constituants issus du lin et du chanvre (et notamment sans tenir compte de la présence éventuelle d'un agent liant).

Les fibres de chanvre (ou ledit mélange fibreux de qualité papetière ou ledit mélange fibreux de qualité technique) et les fibres de lin sont mélangées et mixées pour obtenir un mélange le plus intime et homogène possible.

De préférence, la charge de départ préparée à l'étape a) est constituée, pour plus de 90%, plus de 95%, voire sensiblement 100% de sa masse, de fibres, de lin et de chanvre.

La charge de départ peut être adaptée pour que le flocon selon l'invention comporte moins de 5%, de préférence moins de 2%, de préférence moins de 1%, et/ou de préférence plus de 0,1%, de préférence plus de 0,2%, de préférence plus de 0,5% de constituants additionnels, par exemple paticulaires, pouvant avantageusement apporter des spécificités techniques supplémentaires au flocon selon l'invention ou contribuer à améliorer celles qu'il possède déjà, par exemple la résistance au feu, la résistance à l'humidité, l'isolation thermique et/ou acoustique, la performance mécanique (résistance à un effort de traction, de cisaillement et/ou de compression). Les constituants additionnels peuvent aussi avoir un effet antifongique.

Les teneurs en fibres de lin, en fibres de chanvre sont ajustées de manière à obtenir, à l'issue de l'étape d), un flocon conforme à l'invention.

A l'étape b), on procède au nappage des fibres de lin et des fibres de chanvre, de préférence par nappage pneumatique, par exemple du type « airlay ».

A cet effet, la charge de départ est introduite dans un « nappeur », qui permet de la transformer en un nappé présentant une densité adaptée à l'utilisation à laquelle le flocon est destiné.

A l'étape c), le liage peut être effectué par passage du nappé dans un four à air chaud.

La liaison entre les fibres est assurée par un liage mécanique, par exemple un aiguilletage, en substitution de l'ajout d'un agent liant.

A l'étape d), le nappé selon l'invention obtenu en fin d'étape b) ou c) est broyé afin d'obtenir des flocons selon la présente invention.

De préférence, le broyage s'effectue dans un cylindre à pointe, mais toute autre méthode connue par l'homme du métier peut être utilisée.

De préférence l'étape c) est effectuée avant l'étape d).

Selon un mode de réalisation préféré, un flocon conforme à l'invention comprend, en pourcentages en masse par rapport à la masse totale dudit flocon et pour un total de 100 % :
- entre 45 et 50 % de fibres de lin,
- entre 45 et 50 % de fibres de chanvre.

Des essais ont montré qu'un tel flocon peut présenter les propriétés suivantes :

| | |
|---|---|
| Masse volumique de l'ensemble de flocons | 14 kg/m³ |
| Conductivité thermique (λ) | 0,05 W/m.K |
| Capacité thermique spécifique | 1700 J/kg.K |
| Coefficient de résistance à la vapeur (µ) | 2 |
| Température maximale d'utilisation | 120°C |

Comme l'on peut voir d'après ces résultats, un flocon selon l'invention présente d'excellentes propriétés d'isolation thermique. D'autres essais ont également démontré une bonne résistance à l'humidité, et l'absence d'affaissement avec le temps, en particulier dans un environnement humide. Les propriétés d'isolation thermiques se maintiennent donc dans le temps.

De plus, un flocon selon l'invention offre un déphasage (temps que met la chaleur pour traverser une épaisseur donnée du matériau) avantageusement long: ainsi, un tel flocon peut être mis en oeuvre pour isoler une habitation par exemple, notamment une chambre à coucher, car il est capable d'emmagasiner la chaleur pendant la journée et de la restituer pendant la nuit.

Les flocons peuvent être ensachés, et éventuellement comprimés avant d'être livrés.

Les flocons peuvent être notamment utilisés pour l'isolation thermique et acoustique. Ils peuvent notamment être déversés sur un sol ou être projetés ou pulsés, en particulier dans des endroits difficilement accessibles.

Comme il apparaît clairement à présent, un flocon selon l'invention présente des performances en termes de résistance à l'humidité, de résistance thermique et de longévité qui le rendent particulièrement avantageux pour une utilisation comme matériau d'isolation.

Bien entendu la présente invention est définie par les revendications et n'est pas limitée aux modes de réalisation décrits, fournis à titre d'exemples illustratifs et non limitatifs.

## Revendications

1. Ensemble de flocons, chaque flocon ayant une taille comprise entre 10 et 50mm, **caractérisé en ce que** ledit flocon comprend, en pourcentages en masse par rapport à la masse totale dudit flocon, entre 5 et 80 % de fibres de lin et entre 5 et 80% de fibres de chanvre, la masse volumique du matériau fibreux constituant les flocons, étant inférieure à 30 kg/m³, la liaison entre les fibres étant assurée par un enchevêtrement entre des fibres, en substitution de l'ajout d'un agent liant, ensemble dans lequel, pour chacun desdits flocons, les fibres de lin présentent une taille moyenne supérieure à 25 mm et les fibres de chanvre présentent une taille moyenne supérieure à 25 mm.

2. Ensemble de flocons selon la revendication précédente, chacun desdits flocons comprenant entre 30 et 50 % de fibres de lin et entre 30 et 50 % de fibres de chanvre, en pourcentages en masse par rapport à la masse totale dudit flocon.

3. Ensemble de flocons selon l'une quelconque des revendications précédentes, dans lequel, pour chacun desdits flocons, les fibres de lin présentent une taille moyenne inférieure ou égale à 100 mm et les fibres de chanvre présentent une taille moyenne inférieure ou égale à 100 mm.

4. Ensemble de flocons selon l'une quelconque des revendications précédentes, dans lequel, pour chacun desdits flocons, les fibres de lin présentent une taille moyenne comprise entre 30 et 60 mm et les fibres de chanvre présentent une taille moyenne comprise entre 30 et 60 mm.

5. Ensemble de flocons selon l'une quelconque des revendications précédentes, chacun desdits flocons comprenant entre 5% et 25% de chènevottes de lin et/ou de chanvre, en pourcentages en masse par rapport à la masse totale dudit flocon.

6. Ensemble de flocons selon l'une quelconque des revendications précédentes, dans lequel, pour chacun desdits flocons, les fibres de lin et/ou de chanvre sont sensiblement dépourvues de traces de pesticide.

7. Ensemble de flocons selon l'une quelconque des revendications précédentes, dans lequel, pour chacun desdits flocons, les fibres de lin, les fibres de chanvre et les chènevottes optionnelles représentent ensemble plus de 90 % de la masse totale du flocon.

8. Utilisation d'un ensemble de flocons selon l'une quelconque des revendications précédente, pour l'isolation thermique et/ou acoustique.

## Patentansprüche

1. Menge von Flocken, wobei jede Flocke **dadurch gekennzeichnet ist, dass** die Flocke, in Masseprozent bezogen auf die Gesamtmasse der Flocke, zwischen 5 und 80 % Flachsfasern und zwischen 5 und 80 % Hanffasern mit einer Größe zwischen 10 und 50 mm, Grenzen eingeschlossen, umfasst, wobei die Volumenmasse des Fasermaterials, das die Flocken aufbaut, kleiner ist als 30 kg/m³, die Bindung zwischen den Fasern durch eine Verflechtung zwischen den Fasern, als Ersatz für die Zugabe eines Bindemittels, sichergestellt ist, wobei in der Menge, für jede der Flocken, die Flachsfasern eine mittlere Größe von größer als 25 mm aufweisen und die Hanffasern eine mittlere Größe von größer als 25 mm aufweisen.

2. Menge von Flocken nach dem vorhergehenden Anspruch, wobei jede der Flocken zwischen 30 und 50 % Flachsfasern und zwischen 30 und 50 % Hanffasern, in Masseprozent bezogen auf die Gesamtmenge der Flocken, umfasst.

3. Menge von Flocken nach einem der vorhergehenden Ansprüche, wobei, für jede der Flocken, die Flachsfasern eine mittlere Größe von kleiner oder gleich 100 mm aufweisen und die Hanffasern eine mittlere Größe von kleiner oder gleich 100 mm aufweisen.

4. Menge von Flocken nach einem der vorhergehenden Ansprüche, wobei, für jede der Flocken, die Flachsfasern eine mittlere Größe zwischen 30 und 60 mm, Grenzen eingeschlossen, aufweisen und die Hanffasern eine mittlere Größe zwischen 30 und 60 mm, Grenzen eingeschlossen, aufweisen.

5. Menge von Flocken nach einem der vorhergehenden Ansprüche, wobei jede der Flocken zwischen 5 % und 25 % Flachsschäben und/oder Hanfschäben, in Masseprozent bezogen auf die Gesamtmenge der Flocke, aufweist.

6. Menge von Flocken nach einem der vorhergehenden Ansprüche, wobei, für jede der Flocken, die Flachsfasern und/oder die Hanffasern im Wesentlichen frei sind von Pestizidspuren.

7. Menge von Flocken nach einem der vorhergehenden Ansprüche, wobei, für jede der Flocken, die Flachsfasern, die Hanffasern und die fakultativen Schäben zusammen mehr als 90 % der Gesamtmasse der Flocke ausmachen.

8. Verwendung einer Menge von Flocken nach einem der vorhergehenden Ansprüche zur Wärme und/oder Schallisolierung.

## Claims

1. Flock, each piece of flock having a size between 10 and 50 mm, **characterised in that** this piece of flock has between 5 and 80% linen fibres and between 5 and 80% hemp fibres in percentages by mass in relation to the total mass of this piece of flock, the density of the fibrous material making up the pieces of flock being less than 30 kg/m3, binding between the fibres being provided by entanglement between the fibres as a substitute for adding a binding agent, in which the linen fibres have an average size greater than 25 mm and the hemp fibres have an average size greater than 25 mm for each of these pieces of flock.

2. Flock according to the previous claim, each of these pieces of flock having between 30 and 50% linen fibres and between 30 and 50% hemp fibres in percentages by mass in relation to the total mass of this piece of flock.

3. Flock according to any of the previous claims, in which the linen fibres have an average size less than or equal to 100 mm and the hemp fibres have an average size less than or equal to 100 mm for each of these pieces of flock.

4. Flock according to any one of the previous claims, in which the linen fibres have an average size between 30 and 60 mm and the hemp fibres have an average size between 30 and 60 mm for each of these pieces of flock.

5. Flock according to any one of the previous claims, each of these pieces of flock having between 5% and 25% coarse parts of linen and/or hemp in percentages by mass in relation to the total mass of this piece of flock.

6. Flock according to any one of the previous claims, in which the linen and/or hemp fibres are more or less free from traces of pesticide for each of these pieces of flock.

7. Flock according to any one of the previous claims, in which the linen fibres, the hemp fibres and the optional coarse parts together represent more than 90% of the total mass of the piece of flock for each of these pieces of flock.

8. Use of flock according to any one of the previous claims for thermal and/or acoustic insulation.
